# EUROPÄISCHE PATENTSCHRIFT

(11) **EP 1 868 115 B1**
(45) Veröffentlichungstag und Bekanntmachung des Hinweises auf die Patenterteilung: **18.04.2018**
(21) Anmeldenummer: 06012232.2
(22) Anmeldetag: 14.06.2006
(51) Int. Cl.: H04L 29/08, G06F 17/30

(54) **Benutzerschnittstelle zur Suche und Einordnung von Web-Seiten**
User interface for web browsing and indexing of web pages.
Interface d'utilisateur pour la recherche et l'indexation des pages web

(43) Veröffentlichungstag der Anmeldung: 19.12.2007
(73) Patentinhaber: Vodafone Holding GmbH, 40213 Düsseldorf (DE)
(72) Erfinder: Gaida, Klemens, Dr., 40213 Düsseldorf (DE); Cameron, Neill, Sophia-Antipolis 06902 (FR)
(74) Vertreter: Weisbrodt, Bernd

(56) Entgegenhaltungen:
- WO-A-01/93071
- US-A1- 2003 115 365
- US-A1- 2004 003 351
- US-A1- 2004 239 681
- US-A1- 2006 062 362
- US-B1- 6 185 585

## Beschreibung

Die vorliegende Erfindung betrifft ein Verfahren zum Betreiben einer zum Aufrufen, Darstellen und/oder Verwalten von Dateien ausgebildeten Benutzerschnittstelle mit graphischer Benutzeroberfläche seitens eines Rechners, welcher Mittel zum Zugriff auf ein Dateien bereitstellendes Kommunikationsnetz aufweist, wobei die Benutzerschnittstelle einen Zugriff auf seitens eines Kommunikationsnetzes bereitgestellte Dateien unter Nutzung wenigstens einer Adressierungsinformation einer Datei im Kommunikationsnetz ermöglicht und die Benutzerschnittstelle über ein Eingabemittel des Rechners auswählbare Felder zur Aktivierung des Aufrufs erzeugt, die seitens der graphischen Benutzeroberfläche der Benutzerschnittstelle wiedergegeben werden.

Ferner betrifft die vorliegende Erfindung eine Benutzerschnittstelle mit graphischer Benutzeroberfläche zum Aufrufen von Dateien, mit einer einen Zugriff auf seitens eines Kommunikationsnetzes bereitgestellte Dateien unter Nutzung wenigstens einer Adressierungsinformation einer Datei im Kommunikationsnetz ermöglichenden Einrichtung, einer ein über ein Eingabemittel auswählbares Feld zur Aktivierung des Aufrufs von Dateien erzeugenden Einrichtung und einer Einrichtung zur Wiedergabe des erzeugten Feldes seitens der graphischen Benutzeroberfläche.

Derartige Benutzerschnittstellen mit graphischer Benutzeroberfläche einer sogenannten GUI (GUI: Graphical User Interface), zum Aufrufen, Darstellen und/oder Verwalten von Dateien sowie Verfahren zum Betrieb entsprechender Benutzerschnittstellen sind im Stand der Technik insbesondere im Zusammenhang mit dem Internet als Kommunikationsnetz in Form sogenannter Browser bekannt und beispielsweise seitens der US 2006/0062362 A1, der US 2003/0115365 A1, der EP 0 843 269 B1 der US 6,185,585 B1 oder der WO 01/93071 A2 beschrieben.

Die bisher im Stand der Technik bekannten Benutzerschnittsstellen zum Aufrufen, Darstellen und/oder Verwalten von Dateien sind hinsichtlich der dem Nutzer der Benutzerschnittstellen zur Verfügung stehenden Möglichkeiten einer Kommunikation mit in Mobilfunknetzen betreibbaren Endgeräten beschränkt, insbesondere hinsichtlich der in Mobilfunknetzen für Mitteilungsdienste von Mobilfunknetzen nutzbaren Formate.

Der Erfindung liegt in Anbetracht dieses Standes der Technik die Aufgabe zugrunde, Benutzerschnittstellen der vorgenannten Art sowie Verfahren zum Betrieb von Benutzerschnittstellen der vorgenannten Art hinsichtlich der dem Nutzer der Benutzerschnittstellen zur Verfügung stehenden Möglichkeiten einer Kommunikation mit in Mobilfunknetzen betreibbaren Endgeräten zu verbessern, insbesondere hinsichtlich der in Mobilfunknetzen für Mitteilungsdienste von Mobilfunknetzen nutzbaren Formate.

Zur technischen Lösung wird mit der vorliegenden Erfindung ein Verfahren ausgeführt auf einem Rechner nach Anspruch 1 vorgeschlagen zum Betreiben einer zum Aufrufen, Darstellen und/oder Verwalten von Dateien ausgebildeten Benutzerschnittstelle mit graphischer Benutzeroberfläche seitens eines Rechners, welcher Mittel zum Zugriff auf ein Dateien bereitstellendes Kommunikationsnetz aufweist, wobei die Benutzerschnittstelle einen Zugriff auf seitens eines Kommunikationsnetzes bereitgestellte Dateien unter Nutzung wenigstens einer Adressierungsinformation einer Datei im Kommunikationsnetz ermöglicht und die Benutzerschnittstelle über ein Eingabemittel des Rechners auswählbare Felder zur Aktivierung des Aufrufs erzeugt, die seitens der graphischen Benutzeroberfläche der Benutzerschnittstelle wiedergegeben werden, vorgeschlagen, welche dadurch gekennzeichnet ist, dass zumindest der Inhalt mittels der Benutzerschnittstelle aufrufbarer Dateien zumindest teilweise erfasst wird und wenigstens ein Inhalt des erfassten Inhalts in ein von in Mobilfunknetzen betreibbaren Endgeräten nutzbares Format konvertiert wird.

Der Erfindung liegt die Erkenntnis zugrunde, dass eine Verbesserung hinsichtlich der dem Nutzer von Benutzerschnittschnellen zum Aufrufen, Darstellen und/oder Verwalten von Dateien zur Verfügung stehenden Möglichkeiten einer Kommunikation mit in Mobilfunknetzen betreibbaren Endgeräten insbesondere hinsichtlich der in Mobilfunknetzen für Mitteilungsdienste von Mobilfunknetzen nutzbaren Formate erzielbar ist, wenn die Inhalte von mittels der Benutzerschnittstelle aufgerufener, darstellbarer und/oder verwaltbarer Dateien erfasst und in ein von in Mobilfunknetzen betreibbaren Endgeräten nutzbares Format, vorzugsweise eines Mitteilungsdienstes eines Mobilfunknetzes, konvertiert wird. Erfindungsgemäß werden dabei die Inhalte der mittels der Benutzerschnittstelle aufrufbaren, darstellbaren und/oder verwaltbaren Dateien quasi zwischengespeichert und in das wenigstens eine von in Mobilfunknetzen betreibbaren Endgeräten nutzbare Format des wenigstens einen Mitteilungsdienstes des Mobilfunknetzes konvertiert.

Vorteilhafterweise wird der Inhalt von mittels der Benutzerschnittstelle aufgerufener Dateien erfasst und vorzugsweise in einem Speicherbereich einer Speichereinrichtung zumindest temporär gespeichert. Die Erfassung und/oder Speicherung der Inhalte der mittels der Benutzerschnittstelle aufgerufener Dateien erfolgt dabei vorteilhafterweise in Form beziehungsweise nach Art einer sogenannten Cache-Copy.

Gemäß einer weiteren vorteilhaften Ausgestaltung der Erfindung wird der Inhalt von seitens einer Datenbank des Rechners und/oder von seitens einer über das Kommunikationsnetz für den Nutzer des Rechners zugreifbaren Datenbank bereitgehaltener Dateien erfasst. Eine entsprechende Datenbank kann dabei seitens des Rechners vorgehalten sein und Dateien des Nutzers beinhalten, beispielsweise digitale Fotos, Musikstücke, Texte oder dergleichen Inhalte aufweisende Dateien. Ferner kann eine entsprechende Datenbank über das Kommunikationsnetz für den Nutzer des Rechners zugreifbar sein, wobei die Datenbank seitens des Kommunikationsnetzes eingerichtet ist und der Nutzer über eine Kommunikationsverbindung mit dem Kommunikationsnetz entsprechende Dateien durch Aufrufen, Darstellen und/oder Verwalten nutzen kann. Eine bevorzugte Ausgestaltung sieht die Nutzung einer im Internet bereitgehaltenen Datenbank vor.

In einer besonders bevorzugten Ausgestaltung der Erfindung werden die Inhalte der mittels der Benutzerschnittstelle aufrufbaren, darstellbaren und/oder verwaltbaren Dateien im Rahmen der Erfassung indiziert. Erfindungsgemäß werden dabei die mittels der Benutzerschnittstelle aufrufbaren, darstellbaren und/oder verwaltbaren Dateien, vorzugsweise mittels der Benutzerschnittstelle aufgerufene Dateien mit einem Index entsprechend der Kennung versehen. Durch das Versehen der Inhalte der mittels der Benutzerschnittstelle aufrufbaren, darstellbaren und/oder verwaltbaren Dateien, vorzugsweise der mittels der Benutzerschnittstelle aufgerufenen Dateien, mit einer Kennung eröffnet vorteilhafterweise weitere Benutzungsmöglichkeiten der Inhalte der Dateien hinsichtlich weitergehender Nutzungen in dem wenigstens einen von in Mobilfunknetzen betreibbaren Endgeräten nutzbaren Format des wenigstens einen Mitteilungsdienstes eines Mobilfunknetzes.

Gemäß einem weiteren Vorschlag der Erfindung erfolgt die Indizierung auf Basis wenigstens einer zeitlichen Information. Eine weitere Ausgestaltung sieht vor, dass die Indizierung auf Basis wenigstens einer geographischen Information zusammengesetzt erfolgt. Eine besonders bevorzugte Ausgestaltung der Erfindung sieht vor, dass die geographische Information den tatsächlichen geographischen Aufenthaltsort und/oder Angebotsort einer Datei und/oder deren Inhalts im Kommunikationsnetz beinhaltet. Eine weitere Ausgestaltung der Erfindung sieht vor, dass die geographische Information wenigstens einen Teil einer Adressierungsinformation einer Datei im Kommunikationsnetz aufweist, im Falle des Internets als Kommunikationsnetz insbesondere die sogenannte Top-Level-Domain eines sogenannten einheitlichen Ortsangebers für Ressourcen, URL genannt (URL: Uniform Ressource Locator).

Gemäß einer weiteren vorteilhaften Ausgestaltung der Erfindung wird eine Mitteilung erzeugt, die den konvertierten Inhalt wenigstens eines Teils einer Datei aufweist. Vorteilhafterweise wird die erzeugte Mitteilung über die Benutzerschnittstelle an wenigstens ein in einem Mobilfunknetz betreibbares Endgerät übertragen. Die Übertragung der wenigstens einen Mitteilung erfolgt vorteilhafterweise unter Nutzung einer Kommunikationsverbindung mit dem Kommunikationsnetz.

Gemäß einer weiteren bevorzugten Ausgestaltung der Erfindung ist die Kommunikationsverbindung eine Mobilfunknetzverbindung und/oder das Kommunikationsnetz ein Mobilfunknetz, vorzugsweise ein Mobilfunknetz gemäß einem GSM-, UMTS- und/oder GPRS-Funknetzstandard (GSM: Global System for Mobile Communications; UMTS: Universal Mobile Telecommunications System; GPRS: General Packet Radio Service). Gemäß einer bevorzugten Ausgestaltung der Erfindung wird die wenigstens eine Mitteilung von der Benutzerschnittstelle über eine Mobilfunknetzverbindung übertragen. Eine weitere bevorzugte Ausgestaltung der Erfindung sieht die Nutzung von Multimediamitteilungsdiensten, sogenannte MMS (MMS: Multimedia Message Service), als Format eines Mitteilungsdienstes des Mobilfunknetzes vor.

Eine weitere besonders bevorzugte Ausgestaltung der Erfindung ist dadurch gekennzeichnet, dass die Benutzerschnittstelle wenigstens ein über ein Eingabemittel des Rechners auswählbares Feld zur Steuerung der Erfassung und/oder der Konvertierung des wenigstens einen Inhalts wenigstens einer der mittels der Benutzerschnittstelle aufrufbaren, darstellbaren und/oder verwaltbaren Dateien erzeugt, welches seitens der graphischen Benutzeroberfläche der Benutzerschnittstelle wiedergegeben wird, und dass bei Auswahl und/oder Aktivierung des wenigstens einen Feldes über ein Eingabemittel des Rechners der wenigstens eine Inhalt wenigstens einer der mittels der Benutzerschnittstelle aufrufbaren, darstellbaren und/oder verwaltbaren Dateien erfasst und/oder konvertiert wird. Durch die erfindungsgemäße Ausgestaltung wird die Bedienbarkeit einer erfindungsgemäßen Benutzerschnittstelle weiter vereinfacht, insbesondere da eine erfindungsgemäße Erfassung und/oder Konvertierung durch einfache Auswahl beziehungsweise Aktivierung des entsprechend erzeugten Feldes ermöglicht wird, ohne dass weitere aufwändige Eingaben über Eingabemittel des Rechners erfolgen müssen.

Eine weitere vorteilhafte Ausgestaltung der Erfindung ist dadurch gekennzeichnet, dass die Benutzerschnittstelle wenigstens ein über ein Eingabemittel des Rechners zumindest teilweise auswählbares und/oder aktivierbares Feld zur Steuerung der Übertragung der wenigstens einen Mitteilung erzeugt, welches seitens der graphischen Benutzeroberfläche der Benutzerschnittstelle wiedergegeben wird, und dass bei Auswahl und/oder Aktivierung des wenigstens einen Feldes über ein Eingabemittel des Rechners die wenigstens eine Mitteilung übertragen wird. Durch die erfindungsgemäße Ausgestaltung wird die Bedienbarkeit einer erfindungsgemäßen Benutzerschnittstelle weiter vereinfacht, insbesondere da eine erfindungsgemäße Übertragung durch einfache Auswahl beziehungsweise Aktivierung des entsprechend erzeugten Feldes ermöglicht wird, ohne dass weitere aufwändige Eingaben über Eingabemittel des Rechners erfolgen müssen.

Eine weitere vorteilhafte Ausgestaltung der Erfindung sieht vor, dass die Inhalte der mittels der Benutzerschnittstelle aufrufbaren, darstellbaren und/oder verwaltbaren Dateien im Rahmen der Erfassung und/oder Konvertierung gespeichert werden, vorzugsweise seitens einer Datenbank des Rechners und/oder seitens einer über das Kommunikationsnetz für den Nutzer des Rechners zugreifbaren Datenbank.

Gemäß einer weiteren vorteilhaften Ausgestaltung der Erfindung wird die wenigstens eine, zumindest den konvertierten Inhalt wenigstens einer Datei aufweisende Mitteilung in einem von in Mobilfunknetzen betreibbaren Endgeräten nutzbaren Format eines Mitteilungsdienstes des Mobilfunknetzes durch über ein Eingabemittel des Rechnernetzes erfolgende Auswahl des seitens der graphischen Benutzeroberfläche wiedergegebenen Inhaltes einer mittels der Benutzerschnittstelle aufrufbaren, darstellbaren und/oder verwaltbaren Datei erzeugt, wobei vorzugsweise ein seitens der graphischen Benutzeroberfläche der Benutzerschnittstelle über das Eingabemittel des Rechners ausgewählter Inhalt mit dem Eingabemittel des Rechners in und/oder auf das wenigstens eine über ein Eingabemittel des Rechners zumindest teilweise auswählbare und/oder aktivierbare Feld seitens der graphischen Benutzeroberfläche der Benutzerschnittstelle zur Steuerung der Erfassung und/oder der Konvertierung des wenigstens einen Inhalts verschoben wird. Erfindungsgemäß wird im Rahmen dieser Verfahrensführung eine sogenannte Drag-End-Drop-Bedienung ermöglicht, so dass die Bedienung insgesamt weiter vereinfacht wird. Vorteilhafterweise wird die durch das Verschieben des Inhalts seitens der graphischen Benutzeroberfläche der Benutzerschnittstelle erzeugte Mitteilung zumindest teilautomatisch übertragen. Dadurch wird die Nutzbarkeit einer erfindungsgemäßen Benutzerschnittstelle weiter verbessert.

Eine weiter besonders vorteilhafte Ausgestaltung der Erfindung sieht vor, dass der Rechner ein in einem Mobilfunknetz betreibbares mobiles Endgerät ist, vorzugsweise ein Mobilfunktelefon, und die Kommunikationsverbindung eine Mobilfunknetzverbindung ist und/oder der Rechner ein in einem Mobilfunknetz betreibbares mobiles Endgerät ist und/oder nutzt, vorzugsweise in Form eines Mobilfunktelefons und/oder einer in den Rechner einsetzbaren Steckkarte, wobei die Kommunikationsverbindung vorzugsweise eine Mobilfunknetzverbindung ist.

Zur technischen Lösung der eingangs genannten Aufgabe wird mit der vorliegenden Erfindung ferner vorgeschlagen ein Rechner mit einer Benutzerschnittstelle nach Anspruch 11 mit graphischer Benutzeroberfläche zum Aufrufen von Dateien, mit einer einen Zugriff auf seines eines Kommunikationsnetzes bereitgestellte Dateien unter Nutzung wenigstens einer Adressierungsinformation einer Datei im Kommunikationsnetz ermöglichenden Einrichtung, einer ein über ein Eingabemittel auswählbares Feld zur Aktivierung des Aufrufs von Dateien erzeugenden Einrichtung und einer Einrichtung zur Wiedergabe des erzeugten Feldes seitens der graphischen Benutzeroberfläche vorgeschlagen, welche gekennzeichnet ist durch eine

Einrichtung zur Erfassung des Inhalts einer mittels der Benutzerschnittstelle aufrufbaren, darstellbaren und/oder verwaltbaren Datei und eine Einrichtung zur Konvertierung des von der Einrichtung zur Erfassung des Inhalts einer mittels der Benutzerschnittstelle aufrufbaren, darstellbaren und/oder verwaltbaren Datei erfassten Inhalts wenigstens einer Datei in wenigstens ein von in Mobilfunknetzen betreibbaren Endgeräten nutzbares Format wenigstens eines Mitteilungsdienstes eines Mobilfunknetzes.

Eine weitere Ausgestaltung der Erfindung ist gekennzeichnet durch eine Einrichtung zur Erzeugung wenigstens einer zumindest den konvertierten Inhalt wenigstens einer Datei aufweisenden Mitteilung in einem von in Mobilfunknetzen betreibbaren Endgeräten nutzbaren Format eines Mitteilungsdienstes des Mobilfunknetzes.

Gemäß einer vorteilhaften Ausgestaltung einer erfindungsgemäßen Benutzerschnittstelle ist diese gekennzeichnet durch eine Einrichtung zur zumindest temporären Speicherung des Inhalts von mittels der Benutzerschnittstelle aufgerufener Dateien.

In einer weiteren vorteilhaften Ausgestaltung einer erfindungsgemäßen Benutzerschnittstelle ist diese gekennzeichnet durch eine Einrichtung zur Indexierung von von der Einrichtung zur Erfassung des Inhalts einer mittels der Benutzerschnittstelle aufrufbaren, darstellbaren und/oder verwaltbaren Datei erfasster Inhalte, wobei erfasste Inhalte von Dateien im Rahmen der Erfassung vorteilhafterweise mit einer Kennung versehbar sind. Die Indizierung erfolgt vorteilhafterweise auf Basis einer zeitlichen Information und/oder einer geographischen Information zusammengesetzt. Gemäß einer bevorzugten Ausgestaltung der Erfindung ist die Kennung aus einer vorzugsweise fortlaufenden Nummerierung, wenigstens einer zeitlichen Information und/oder wenigstens einer geographischen Information zusammengesetzt. Vorteilhafterweise beinhaltet die geographische Information den tatsächlichen geographischen Aufenthaltsort und/oder Angebotsort einer Datei im Kommunikationsnetz. Eine weitere Ausgestaltung der Erfindung sieht vor, dass die geographische Information wenigstens einen Teil einer Adressierungsinformation einer Datei im Kommunikationsnetz aufweist.

Eine weitere Ausgestaltung einer erfindungsgemäßen Benutzerschnittstelle ist gekennzeichnet durch eine Einrichtung zur Übertragung der wenigstens einen von der Einrichtung zur Erzeugung wenigstens einer zumindest den konvertierten Inhalt wenigstens einer Datei aufweisenden Mitteilung in einem von in Mobilfunknetzen betreibbaren Endgeräten nutzbaren Format eines Mitteilungsdienstes des Mobilfunknetzes erzeugten Mitteilung in einem von in Mobilfunknetzen betreibbaren Endgeräten nutzbaren Format eines Mitteilungsdienstes des Mobilfunknetzes an wenigstens ein in einem Mobilfunknetz betreibbares Endgerät.

Eine weitere Ausgestaltung der Erfindung sieht einen Betrieb einer erfindungsgemäßen Benutzerschnittstelle seitens eines Rechners nach einem erfindungsgemäßen Verfahren vor.

Weitere Einzelheiten, Merkmale und Vorteile der Erfindung werden nachfolgend anhand des in der Figur der Zeichnung dargestellten Ausführungsbeispiels näher erläutert. Dabei zeigt:

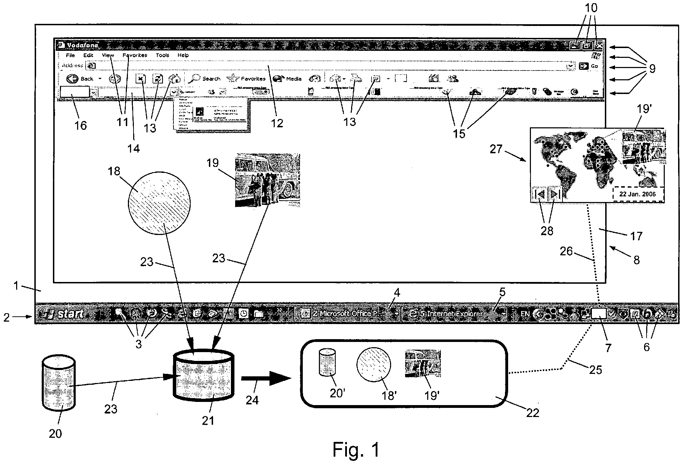

- Fig. 1: in einer schematischen Prinzipdarstellung ein Ausführungsbeispiel einer erfindungsgemäßen Benutzerschnittstelle mit graphischer Benutzeroberfläche zum Aufrufen, Darstellen und/oder Verwalten von Dateien und ein Ausführungsbeispiel eines erfindungsgemäßen Betriebs derselben seitens eines Rechners.

Fig. 1 zeigt eine graphische Benutzeroberfläche 1 einer Benutzerschnittstelle eines auf einem Rechner ausgeführten Betriebssystems. Die graphische Benutzeroberfläche wird dabei seitens einer Anzeigeeinrichtung des Rechners wiedergegeben. In einem unteren Bereich der graphischen Benutzeroberfläche sind dabei in einer Funktionsleiste 2 Schalt- und/oder Funktionsflächen 3, 4, 5, 6 und 7 vorhanden, welche zur Steuerung von Funktionalitäten und/oder Anwendungsprogrammen mittels der graphischen Benutzeroberfläche der Benutzerschnittstelle des Betriebssystems dienen.

Die Schaltflächen 3, 6 und 7 sind als auswählbare und/oder aktivierbare Felder ausgebildet, die bei Betätigung über ein Eingabemittel des Rechners, insbesondere einem graphischen Eingabemittel in Form einer sogenannten Maus, entsprechende Anwendungsprogramme und/oder Funktionalitäten derselben aufrufen und seitens der graphischen Benutzeroberfläche wiedergeben.

Die Schalt- und/oder Funktionsflächen 4 und 5 sind als über ein Eingabemittel des Rechners auswählbare Felder ausgebildet. Dabei signalisieren die in der Funktionsleiste 2 wiedergegebenen Felder der Schalt- und/oder Funktionsflächen 4 und 5 in der Funktionsleiste die Ausführung eines entsprechenden Anwendungsprogramms seitens der graphischen Benutzeroberfläche 1 der Benutzerschnittstelle des Betriebssystems. Bei Betätigung der Felder der Schalt- und/oder Funktionsflächen 4 oder 5 durch Auswahl über ein Eingabemittel des Rechners wird dieses dabei als das jeweils aktiv genutzte Anwendungsprogramm in Form eines sogenannten Fensters seitens der graphischen Benutzeroberfläche 1 der Benutzerschnittstelle des Betriebssystems wiedergegeben. Vorliegend wird das über die Schalt- und/oder Funktionsfläche 5 in der Funktionsleiste 2 dargestellte Anwendungsprogramm, vorliegend eine Benutzerschnittstelle mit graphischer Benutzeroberfläche 8 zum Aufrufen, Darstellen und/oder Verwalten von Dateien in einem Fenster 8 aktiv ausgeführt.

Bei der Benutzerschnittstelle mit graphischer Benutzeroberfläche 8 zum Aufrufen, Darstellen und/oder Verwalten von Dateien handelt es sich dabei um einen sogenannten Browser, welcher über eine Kommunikationsverbindung mit dem Internet als Kommunikationsnetz einen Zugriff auf seitens des Internets bereitgestellte Dateien und deren Inhalte ermöglicht. Die Benutzerschnittstelle mit graphischer Benutzeroberfläche 8 zum Aufrufen, Darstellen und/oder Verwalten von Dateien ist dabei als Anwendungsprogramm seitens der graphischen Benutzeroberfläche 1 der Benutzerschnittstellte des Betriebssystems seitens des Rechners ausgeführt. Dabei sind in einem oberen Bereich der graphischen Benutzeroberfläche 8 Funktionsleisten 9 vorgesehen, die verschiedene Schalt-, Funktions- und/oder Eingabeflächen 10, 11, 12, 13, 14, 15 und 16 in Form von zumindest teilweise auswählbaren und/oder aktivierbaren Feldern zur Eingabe, Ausgabe und/oder Steuerung des Aufrufs, der Darstellung und/oder der Verwaltung von Dateien und/oder Adressierungsinformationen aufweisen.

Mittels der Adressierungsinformationen wird dabei über eine Kommunikationsverbindung mit dem Internet als Kommunikationsnetz ein Zugriff auf seitens des Internets bereitgestellte Dateien ermöglicht. Im Zusammenhang mit dem Internet als Kommunikationsnetz werden als Adressierungsinformationen vorliegend einheitliche Ortsangeber für Ressourcen, sogenannte URLs (URL: Uniform Resource Locator), verwendet. Entsprechende Adressierungsinformationen sind seitens der graphischen Benutzeroberfläche 8 seitens der Eingabefläche 12 mittels einer Eingabeeinrichtung des Rechners, in der Regel einer Tastatur, eingebbar.

Die in der Funktionsleiste 9 der graphischen Benutzeroberfläche 8 der Benutzerschnittstelle wiedergegebenen Schaltflächen 10 dienen zur Beeinflussung der Wiedergabe der graphischen Benutzerschnittstelle 8 seitens der Benutzerschnittstelle 1 des Vertriebssystems und erlauben zum einen ein Maximieren beziehungsweise Minimieren des Fensters der graphischen Benutzeroberfläche 8 und/oder ein Beenden der Benutzerschnittstelle (Browser).

Die Schaltflächen 13 in der Funktionsleiste 9 der graphischen Benutzeroberfläche 8 der Benutzerschnittstelle zum Aufrufen, Darstellen und/oder Verwalten von Dateien sind als aktivierbare Felder zur Ausführung verschiedener Funktionalitäten und/oder Anwendungen mittels der Benutzerschnittstelle zum Aufrufen, Darstellen und/oder Verwalten von Dateien, welche seitens des Anzeigebereichs 17 der graphischen Benutzeroberfläche 8 der Benutzerschnittstelle wiedergegeben werden.

Die weiter in den Funktionsleisten 9 der graphischen Benutzeroberfläche 8 vorhandenen Schaltflächen 15 und 16 sind als auswählbare und/oder aktivierbare Felder zum Aufruf von weitergehenden Anwendungen und/oder Nutzungen der Benutzerschnittstelle mit graphischer Benutzeroberfläche 8 zum Aufrufen, Darstellen und/oder Verwalten von Dateien ausgebildet.

Die Benutzerschnittstelle mit graphischer Benutzeroberfläche 8 zum Aufrufen, Darstellen und/oder Verwalten von Dateien weist eine Einrichtung 21 zur Erfassung des Inhalts einer mittels der Benutzerschnittstelle aufrufbaren, darstellbaren und/oder verwaltbaren Datei auf. In Fig. 1 sind seitens des Anzeigebereichs 17 der graphischen Benutzeroberfläche 8 der Benutzerschnittstelle symbolisch zwei Dateien beziehungsweise deren Inhalte 18 und 19 dargestellt, welche seitens der Benutzerschnittstelle aufgerufen sind. Die Erfassung der Inhalte 18 und 19 der aufgerufenen Dateien 18 und 19 mittels der Speichereinrichtung 21 ist in Fig. 1 symbolisch durch die mit 23 gekennzeichneten Pfeile dargestellt. Weiter sind mittels der Speichereinrichtung 21 der Benutzerschnittstelle Inhalte von seitens einer Datenbank 20 bereitgehaltener Dateien erfassbar. Die Datenbank 20 kann sich dabei lokal seitens des die Benutzerschnittstelle mit graphischer Benutzeroberfläche 8 zum Aufrufen,

Darstellen und/oder Verwalten von Dateien ausführenden Rechner und/oder seitens des Internets befinden.

Die seitens der Speichereinrichtung 21 erfassten Inhalte werden vorliegend in ein von in Mobilfunknetzen betreibbaren Endgeräten nutzbares Format eines Mitteilungsdienstes eines Mobilfunknetzes konvertiert. Die Konvertierung der Inhalte der Dateien ist dabei symbolisch durch den in Fig. 1 mit 24 gekennzeichneten Pfeil dargestellt. Die konvertierten Inhalte 18', 19' und 20' der Dateien beziehungsweise Inhalte 18, 19 und 20 werden seitens einer Speichereinrichtung 22 der Benutzerschnittstelle zumindest temporär gespeichert. Im Rahmen der Erfassung und/oder Konvertierung der Inhalte der Dateien 18, 19 und 20 werden zumindest die konvertierten Inhalte 18', 19', und 20' seitens der Speichereinrichtung 22 indiziert. Im Rahmen der Indizierung der Inhalte 18', 19'und 20' erhalten diese dabei eine Kennung, welche aus einer fortlaufenden Nummerierung, einer zeitlichen Information und einer geographischen Information, vorliegend in Form eines sogenannten Geo-Codes, besteht. Durch die Indizierung der konvertierten Inhalte 18', 19', und 20' wird dem Nutzer der graphischen Benutzeroberfläche die Möglichkeit gegeben, nachzuverfolgen, wann und in welchem Zusammenhang welche Inhalte mittels der Benutzerschnittstelle mit graphischer Benutzeroberfläche 8 durch Aufrufen, Darstellen und/oder Verwalten genutzt wurden. Durch die Indizierung sind die entsprechend konvertierten Inhalte 18', 19', und 20' in weitergehenden Nutzungen mit einer verbesserten Funktionalität nutzbar, beziehungsweise einer solchen Nutzung zuführbar.

Die Funktionalität der Erfassung und Konvertierung von Inhalten mittels der Benutzerschnittstelle aufrufbarer, darstellbarer und/oder verwaltbarer Datei wird vorliegend zum einen seitens der Funktionsleiste 2 der graphischen Benutzeroberfläche 1 des Betriebssystems durch die Schalt- und/oder Funktionsfläche 7 und zum anderen durch die in der Funktionsleiste 9 der graphischen Benutzeroberfläche 8 der Benutzerschnittstelle wiedergegebene Schalt- und/oder Funktionsfläche 16 zur Aktivierung, Nutzung und/oder Signalisierung wiedergegeben. Fig. 1 zeigt ein Ausführungsbeispiel eines durch Betätigung der Schalt- und/oder Funktionsfläche 7 erfolgenden Funktionsaufrufs 25, 26 von erfassten und konvertierten Dateiinhalten. Die über den Funktionsaufruf 25, 26 gegebene Funktionalität 27 betrifft die Überprüfung der Indizierung von Mittels der Speichereinrichtung 22 erfassten konvertierten Dateiinhalten. Diese werden seitens eines Fensters seitens der graphischen Benutzeroberfläche 1 des Betriebssystems zusammen mit einer zeitlichen Information, vorliegend einem Datum des Aufrufs beziehungsweise der Konvertierung als auch einer geographischen Information in Form eines Geo-Codes hinsichtlich des Aufenthaltsorts beziehungsweise des Angebots des Inhalts wiedergegeben. Über Schalt- und/oder Funktionsflächen 28 seitens des Fensters sind die in der Speichereinrichtung 22 entsprechend indiziert erfassten konvertierten Inhalte 18', 19', und 20' der Reihe nach selektier- beziehungsweise auswählbar und entsprechend seitens des Fensters der Funktionalität 27 darstellbar.

Eine Betätigung beziehungsweise Auswahl der Schalt- und/oder Funktionsfläche 16 seitens der graphischen Benutzeroberfläche 8 der Benutzerschnittstelle wird automatisch eine Mitteilung in einem von in Mobilfunknetzen betreibbaren Endgeräten nutzbaren Format eines Mitteilungsdienstes des Mobilfunknetzes, vorzugsweise gemäß einem standardisieren Datenformat gemäß der 3GPP, erzeugt und vorzugsweise mittels eines Mitteilungsdienstes des Mobilfunknetzes an wenigstens ein in dem Mobilfunknetz betreibbares Endgerät übertragen.

Das in der Figur der Zeichnung dargestellte Ausführungsbeispiel und die im Zusammenhang mit diesem beschriebenen beispielhaften Anwendungsformen dienen lediglich der Erläuterung der Erfindung und sind für diese nicht beschränkend.

### Bezugszeichenliste:

- 1: graphische Benutzeroberfläche (Benutzerschnittstelle (Betriebssystem))
- 2: Funktionsleiste (graphische Benutzeroberfläche (1))
- 3: Schaltfläche (Funktionsleiste (2))
- 4: Schalt- und/oder Funktionsfläche (Funktionsleiste (2))
- 5: Schalt- und/oder Funktionsfläche (Funktionsleiste (2))
- 6: Schaltfläche (Funktionsleiste (2))
- 7: Schalt- und/oder Funktionsfläche (Funktionsleiste (2))
- 8: graphische Benutzeroberfläche/GUI (Benutzerschnittstelle/Browser)
- 9: Funktionsleiste (graphische Benutzeroberfläche (8))
- 10: Schaltfläche (Funktionsleiste (9))
- 11: Funktionsfläche (Funktionsleiste (9))
- 12: Eingabefläche für Adressierungsinformationen (Funktionsleiste (9))
- 13: Schaltfläche (Funktionsleiste (9))
- 14: Schalt- und/oder Funktionsfläche (Funktionsleiste (9))
- 15: Schaltfläche (Funktionsleiste (9))
- 16: Schalt- und/oder Funktionsfläche (Funktionsleiste (9))
- 17: Anzeigebereich (graphische Benutzeroberfläche (8))
- 18: Datei/Inhalt

- 18': konvertierter Inhalt von Datei/Inhalt (18)
- 19: Datei/Inhalt
- 19': konvertierter Inhalt von Datei/Inhalt (19)
- 20: Datenbank (Datei/Inhalt)
- 20': konvertierter Inhalt von Datei/Inhalt (20)
- 21: Speichereinrichtung (erfasste Inhalte)
- 22: Speichereinrichtung (konvertierte Inhalte)
- 23: Inhaltserfassung
- 24: Inhaltskonvertierung
- 25: Funktionsaufruf (Schaltfläche (7))
- 26: Funktionsaufruf (Schaltfläche (7))
- 27: Funktionalität (Funktionsaufruf (26))
- 28: Schalt- und/oder Funktionsfläche (Funktionalität (27))

## Patentansprüche

1. Verfahren ausgeführt auf einem Rechner, zum Betreiben einer zum Aufrufen, Darstellen und/oder Verwalten von Dateien ausgebildeten Benutzerschnittstelle mit graphischer Benutzeroberfläche (8), GUI, wobei der Rechner Mittel zum Zugriff auf ein Dateien bereitstellendes Kommunikationsnetz aufweist,
wobei
die Benutzerschnittstelle einen Zugriff auf seitens eines Kommunikationsnetzes bereitgestellte Dateien (18, 19, 20) unter Nutzung wenigstens einer Adressierungsinformation, URL, einer Datei (18, 19) im Kommunikationsnetz ermöglicht
und
die Benutzerschnittstelle über ein Eingabemittel des Rechners auswählbare Felder (11, 12, 13, 14, 15) zur Aktivierung des Aufrufs erzeugt, die seitens der graphischen Benutzeroberfläche (8), GUI, der Benutzerschnittstelle wiedergegeben werden,
**dadurch gekennzeichnet,**
**dass** der Inhalt mittels der Benutzerschnittstelle aufrufbarer Dateien (18, 19, 20) zumindest teilweise erfasst wird
und
wenigstens ein Teil des erfassten Inhalts in ein von in Mobilfunknetzen betreibbaren Endgeräten nutzbares Format konvertiert wird.

2. Verfahren nach Anspruch 1, **dadurch gekennzeichnet, dass** die Inhalte (18, 19, 20, 18', 19', 20') der mittels der Benutzerschnittstelle aufrufbaren, darstellbaren und/oder verwaltbaren Dateien im Rahmen der Erfassung indiziert werden.

3. Verfahren nach Anspruch 2, **dadurch gekennzeichnet, dass** die Indizierung auf Basis einer zeitlichen Information erfolgt.

4. Verfahren nach Anspruch 2 oder Anspruch 3, **dadurch gekennzeichnet, dass** die Indizierung auf Basis einer geographischen Information zusammengesetzt erfolgt.

5. Verfahren nach Anspruch 4, **dadurch gekennzeichnet, dass** die geographische Information den tatsächlichen geographischen Aufenthaltsort und/oder Angebotsort einer Datei im Kommunikationsnetz (Internet) beinhaltet.

6. Verfahren nach Anspruch 4 oder Anspruch 5, **dadurch gekennzeichnet, dass** die geographische Information wenigstens einen Teil einer Adressierungsinformation, URL, einer Datei im Kommunikationsnetz aufweist.

7. Verfahren nach einem der Ansprüche 1 bis 6, **dadurch gekennzeichnet, dass** eine Mitteilung erzeugt wird, die den konvertierten Inhalt (18', 19', 20') wenigstens eines Teils einer Datei aufweist.

8. Verfahren nach Anspruch 7, **dadurch gekennzeichnet, dass** die erzeugte Mitteilung über die Benutzerschnittstelle an wenigstens ein in einem Mobilfunknetz betreibbares Endgerät übertragen wird.

9. Verfahren nach einem der Ansprüche 1 bis 8, **dadurch gekennzeichnet, dass** die Benutzerschnittstelle wenigstens ein über ein Eingabemittel des Rechners auswählbares Feld zur (7, 16) Steuerung der Erfassung und/oder der Konvertierung des wenigstens einen Inhalts wenigstens einer der mittels der Benutzerschnittstelle aufrufbaren, darstellbaren und/oder verwaltbaren Dateien erzeugt, welches seitens der graphischen Benutzeroberfläche (8), GUI, der Benutzerschnittstelle wiedergegeben wird, und dass bei Auswahl und/oder Aktivierung des wenigstens einen Feldes über ein Eingabemittel des Rechners der wenigstens eine Inhalt wenigstens einer der mittels der Benutzerschnittstelle (Browser) aufrufbaren, darstellbaren und/oder verwaltbaren Dateien (18, 19, 20) erfasst und/oder konvertiert wird.

10. Verfahren nach einem der Ansprüche 1 bis 9, **dadurch gekennzeichnet, dass** die Benutzerschnittstelle wenigstens ein über ein Eingabemittel des Rechners auswählbares Feld (7, 16) zur Steuerung der Übertragung der wenigstens einen Mitteilung erzeugt, welches seitens der graphischen Benutzeroberfläche, GUI, der Benutzerschnittstelle wiedergegeben wird, und dass bei Auswahl und/oder Aktivierung des wenigstens einen Feldes über ein Eingabemittel des Rechners die wenigstens eine Mitteilung übertragen wird.

11. Rechner mit einer Benutzerschnittstelle mit graphischer Benutzeroberfläche, GUI, zum Aufrufen von Dateien (18, 19, 20),
mit
einer einen Zugriff auf seitens eines Kommunikationsnetzes (Internet) bereitgestellte Dateien unter Nutzung wenigstens einer Adressierungsinformation, URL, einer Datei im Kommunikationsnetz ermöglichenden Einrichtung,
einer ein über ein Eingabemittel auswählbares Feld zur Aktivierung des Aufrufs von Dateien (18, 19, 20) erzeugenden Einrichtung
und
einer Einrichtung zur Wiedergabe des erzeugten Feldes seitens der graphischen Benutzeroberfläche (8), GUI,
**gekennzeichnet durch**,
eine Einrichtung (21) zur Erfassung des Inhalts einer mittels der Benutzerschnittstelle aufrufbaren, darstellbaren und/oder verwaltbaren Datei und
eine Einrichtung (24) zur Konvertierung des von der Einrichtung zur Erfassung des Inhalts einer mittels der Benutzerschnittstelle aufrufbaren, darstellbaren und/oder verwaltbaren Datei erfassten Inhalts wenigstens einer Datei in wenigstens ein von in Mobilfunknetzen betreibbaren Endgeräten nutzbares Format wenigstens eines Mitteilungsdienstes eines Mobilfunknetzes.

12. Rechner nach Anspruch 11, **gekennzeichnet durch** eine Einrichtung zur Erzeugung wenigstens einer zumindest den konvertierten Inhalt wenigstens einer Datei aufweisenden Mitteilung in einem von in Mobilfunknetzen betreibbaren Endgeräten nutzbaren Format eines Mitteilungsdienstes des Mobilfunknetzes.

13. Rechner nach Anspruch 11 oder Anspruch 12, **gekennzeichnet durch** eine Einrichtung zur Indexierung von von der Einrichtung zur Erfassung des Inhalts einer mittels der Benutzerschnittstelle aufrufbaren, darstellbaren und/oder verwaltbaren Datei erfasster Inhalte, wobei erfasste Inhalte von Dateien im Rahmen der Erfassung mit einer Kennung versehbar sind.

14. Rechner nach Anspruch 13, **dadurch gekennzeichnet, dass** die Indizierung auf Basis einer zeitlichen Information erfolgt.

15. Rechner nach Anspruch 13 oder Anspruch 14, **dadurch gekennzeichnet, dass** Indizierung auf Basis einer geographischen Information zusammengesetzt erfolgt.

16. Rechner nach Anspruch 15, **dadurch gekennzeichnet, dass** die geographische Information den tatsächlichen geographischen Aufenthaltsort und/oder Angebotsort einer Datei im Kommunikationsnetz beinhaltet.

17. Rechner nach Anspruch 15 oder Anspruch 16, **dadurch gekennzeichnet, dass** die geographische Information wenigstens einen Teil einer Adressierungsinformation, URL, einer Datei im Kommunikationsnetz aufweist.

18. Rechner nach einem der Ansprüche 11 bis 17, **gekennzeichnet durch** eine Einrichtung zur Übertragung der wenigstens einen von der Einrichtung zur Erzeugung wenigstens einer zumindest den konvertierten Inhalt wenigstens einer Datei aufweisenden Mitteilung in einem von in Mobilfunknetzen betreibbaren Endgeräten nutzbaren Format eines Mitteilungsdienstes des Mobilfunknetzes erzeugten Mitteilung in einem von in Mobilfunknetzen betreibbaren Endgeräten nutzbaren Format eines Mitteilungsdienstes des Mobilfunknetzes an wenigstens ein in einem Mobilfunknetz betreibbares Endgerät.

## Claims

1. A method carried out on a computer, for operating a user interface designed for calling, representing and/or managing files, the user interface having a graphic user surface (8), GUI, wherein the computer comprises means for having access to a communication network providing files,
wherein
the user interface enables an access to files (18, 19, 20) provided by a communication network by using at least one addressing information item, URL, of a file (18, 19) in the communication network
and
the user interface generates selectable fields (11, 12, 13, 14, 15) via an input means of the computer for activating the call, which fields will be reproduced by the graphic user surface (8), GUI, of the user interface,
**characterized in that**
the contents of files (18, 19, 20) that can be called by means of the user interface will be at least partially gathered
and
at least a part of the gathered contents will be converted into a format that can be used by terminals operable in mobile radio networks.

2. A method according to claim 1, **characterized in that** the contents (18, 19, 20, 18', 19', 20') of the files that can be called, represented and/or managed by means of the user interface will be indexed within the scope of the gathering.

3. A method according to claim 2, **characterized in that** the indexation will take place on the base of a time information item.

4. A method according to claim 2 or claim 3, **characterized in that** the indexation will take place in a composed manner on the base of a geographic information item.

5. A method according to claim 4, **characterized in that** the geographic information item contains the actual geographic abode and/or the place of offer of a file in the communication network (internet).

6. A method according to claim 4 or claim 5, **characterized in that** the geographic information item comprises at least a part of an addressing information item, URL, of a file in the communication network.

7. A method according to one of the claims 1 to 6, **characterized in that** a message is produced which comprises the converted contents (18', 19', 20') of at least a part of a file.

8. A method according to claim 7, **characterized in that** the produced message will be transmitted via the user interface to at least one terminal operable in a mobile radio network.

9. A method according to one of the claims 1 to 8, **characterized in that** the user interface generates at least one field that can be selected via an input means of the computer (7, 16) for controlling the gathering and/or conversion of the at least one contents of at least one of the files that can be called, represented and/or managed by means of the user interface, which field will be reproduced by the graphic user surface (8), GUI, of the user interface, and that if the at least one field is selected and/or activated via an input means of the computer, the at least one contents of at least one of the files (18, 19, 20) that can be called, represented and/or managed by means of the user interface (browser) will be gathered and/or converted.

10. A method according to one of the claims 1 to 9, **characterized in that** the user interface generates at least one field that can be selected via an input means of the computer for controlling the transmission of the at least one message, which field will be reproduced by the graphic user surface (8), GUI, of the user interface, and that if the at least one field is selected and/or activated via an input means of the computer, the at least one message will be transmitted.

11. A computer comprising a user interface with a graphic user surface, GUI, for calling files (18, 19, 20),
comprising
a device which enables an access to files provided by a communication network (internet) by using at least one addressing information item, URL, of a file in the communication network,
a device which generates a field selectable via an input means for activating the call of files (18, 19, 20)
and
a device for reproducing the generated field by means of the graphic user surface (8), GUI,
**characterized by**
a device (21) for gathering the contents of a file that can be called, represented and/or managed by means of the user interface
and
a device (24) for converting the contents of at least one file, which contents has been gathered by the device for gathering the contents of a file that can be called, represented and/or managed by means of the user interface, into at least one format of at least one message service of a mobile radio network, which format can be used by terminals operable in a mobile radio network.

12. A computer according to claim 11, **characterized by** a device for generating at least one message comprising at least the converted contents of at least one file in a format of a message service of a mobile radio network, which format can be used by terminals operable in a mobile radio network.

13. A computer according to claim 11 or claim 12, **characterized by** a device for indexing contents which have been gathered by the device for gathering the contents of a file that can be called, represented and/or managed by means of the user interface, wherein gathered contents of files can be provided with an identifier within the scope of the gathering.

14. A computer according to claim 13, **characterized in that** the indexation will take place on the base of a time information item.

15. A computer according to claim 13 or claim 14, **characterized in that** the indexation will take place in a composed manner on the base of a geographic information item.

16. A computer according to claim 15, **characterized in that** the geographic information item contains the actual geographic abode and/or the place of offer of a file in the communication network.

17. A computer according to claim 15 or claim 16, **characterized in that** the geographic information item comprises at least a part of an addressing information item, URL, of a file in the communication network.

18. A computer according to one of the claims 11 to 17, **characterized by** a device for transmitting the at least one message generated by the device for generating at least one message comprising at least the converted contents of at least one file in a format of a message service of the mobile radio network, which format is usable by terminals operable in mobile radio networks, the message to be transmitted being in a format of a message service of the mobile radio network, which format is usable by terminals operable in mobile radio networks, to at least one terminal operable in a mobile radio network.

## Revendications

1. Procédé exécuté sur un ordinateur pour faire fonctionner une interface utilisateur ayant une interface utilisateur graphique (8), GUI, et configurée pour appeler, représenter et/ou gérer des fichiers, l'ordinateur comprenant des moyens permettant un accès à un réseau de communication fournissant des fichiers,
dans lequel
l'interface utilisateur permet un accès à des fichiers (18, 19, 20) fournis par un réseau de communication en utilisant au moins une information d'adressage, URL, d'un fichier (18, 19) dans le réseau de communication
et
l'interface utilisateur génère des champs (11, 12, 13, 14, 15) sélectionnables via un moyen d'entrée de l'ordinateur pour activer l'appel, lesquels champs sont reproduits par l'interface utilisateur graphique (8), GUI, de l'interface utilisateur,
**caractérisé en ce que**
le contenu de fichiers (18, 19, 20) susceptibles d'être appelés par moyen de l'interface utilisateur est au moins partiellement saisi
et
au moins une partie du contenu saisi est converti en un format utilisable par des terminaux fonctionnant dans des réseaux radio mobiles.

2. Procédé selon la revendication 1, **caractérisé en ce que** les contenus (18, 19, 20, 18', 19', 20') des fichiers susceptibles d'être appelés, représentés et/ou gérés par moyen de l'interface utilisateur sont indexés dans le cadre de la saisie.

3. Procédé selon la revendication 2, **caractérisé en ce que** l'indexation s'effectue sur la base d'une information temporelle.

4. Procédé selon la revendication 2 ou la revendication 3, **caractérisé en ce que** l'indexation s'effectue de manière composée sur la base d'une information géographique.

5. Procédé selon la revendication 4, **caractérisé en ce que** l'information géographique comprend l'emplacement géographique réel et/ou le lieu de l'offre d'un fichier dans le réseau de communication (internet).

6. Procédé selon la revendication 4 ou la revendication 5, **caractérisé en ce que** l'information géographique comprend au moins une partie d'une information d'adressage, URL, d'un fichier dans le réseau de communication.

7. Procédé selon l'une des revendications 1 à 6, **caractérisé en ce qu'**un message est généré, lequel comprend le contenu converti (18', 19', 20') d'au moins une partie d'un fichier.

8. Procédé selon la revendication 7, **caractérisé en ce que** le message généré est transmis via l'interface utilisateur à au moins un terminal fonctionnant dans un réseau radio mobile.

9. Procédé selon l'une des revendications 1 à 8, **caractérisé en ce que** l'interface utilisateur génère au moins un champ (7, 16) sélectionnable via un moyen d'entrée de l'ordinateur pour commander la saisie et/ou la conversion de l'au moins un contenu de l'au moins un des fichiers susceptibles d'être appelés, représentés et/ou gérés par moyen de l'interface utilisateur, lequel champ est reproduit par l'interface utilisateur graphique (8), GUI, de l'interface utilisateur, et que si l'au moins un champ est sélectionné et/ou activé via un moyen d'entrée de l'ordinateur, l'au moins un contenu de l'au moins un des fichiers (18, 19, 20) susceptibles d'être appelés, représentés et/ou gérés par moyen de l'interface utilisateur (navigateur) sera saisi et/ou converti.

10. Procédé selon l'une des revendications 1 à 9, **caractérisé en ce que** l'interface utilisateur génère au moins un champ (7, 16) sélectionnable via un moyen d'entrée de l'ordinateur pour commander la transmission de l'au moins un message, lequel champ est reproduit par l'interface utilisateur graphique (8), GUI, de l'interface utilisateur, et que si l'au moins un champ est sélectionné et/ou activé via un moyen d'entrée de l'ordinateur, l'au moins un message sera transmis.

11. Ordinateur comprenant une interface utilisateur ayant une interface utilisateur graphique, GUI, pour appeler des fichiers (18, 19, 20),
comprenant
un dispositif permettant un accès à des fichiers (18, 19, 20) fournis par un réseau de communication (internet) en utilisant au moins une information d'adressage, URL, d'un fichier (18, 19) dans le réseau de communication,
un dispositif, qui génère un champ sélectionnable via un moyen d'entrée pour activer l'appel de fichiers (18, 19, 20)
et
un dispositif pour reproduire le champ généré par moyen de l'interface utilisateur graphique (8), GUI,
**caractérisé par**
un dispositif (21) destiné à saisir le contenu d'un fichier susceptible d'être appelé, représenté et/ou géré par moyen de l'interface utilisateur
et
un dispositif (24) destiné à convertir le contenu d'un fichier susceptible d'être appelé, représenté et/ou géré par moyen de l'interface utilisateur, le contenu étant saisi par le dispositif destiné à saisir le contenu, en au moins format d'un service de messages d'un réseau radio mobile utilisable par des terminaux fonctionnant dans des réseaux radio mobiles.

12. Ordinateur selon la revendication 11, **caractérisé par** un dispositif pour générer au moins un message comprenant au moins le contenu converti d'au moins un fichier dans un format d'un service de messages d'un réseau radio mobile utilisable par des terminaux fonctionnant dans des réseaux radio mobiles.

13. Ordinateur selon la revendication 11 ou la revendication 12, **caractérisé par** un dispositif d'indexation des contenus saisis par le dispositif destiné à saisir le contenu d'un fichier susceptible d'être appelé, représenté et/ou géré par moyen de l'interface utilisateur, des contenus de fichiers saisis pouvant être pourvus d'un identificateur dans le cadre de la saisie.

14. Ordinateur selon la revendication 13, **caractérisé en ce que** l'indexation s'effectue sur la base d'une information temporelle.

15. Ordinateur selon la revendication 13 ou la revendication 14, **caractérisé en ce que** l'indexation s'effectue de manière composée sur la base d'une information géographique.

16. Ordinateur selon la revendication 15, **caractérisé en ce que** l'information géographique comprend l'emplacement géographique réel et/ou le lieu de l'offre d'un fichier dans le réseau de communication.

17. Ordinateur selon la revendication 15 ou la revendication 16, **caractérisé en ce que** l'information géographique comprend au moins une partie d'une information d'adressage, URL, d'un fichier dans le réseau de communication.

18. Ordinateur selon l'une des revendications 11 à 17, **caractérisé par** un dispositif de transmission de l'au moins un message généré par le dispositif destiné à générer au moins un message comprenant au moins le contenu converti d'au moins un fichier dans un format d'un service de messages du réseau radio mobile utilisable par des terminaux fonctionnant dans des réseaux radio mobiles, le message étant transmis dans un format d'un service de messages du réseau radio mobile utilisable par des terminaux fonctionnant dans des réseaux radio mobiles à au moins un terminal fonctionnant dans un réseau radio mobile.
